# EUROPEAN PATENT SPECIFICATION

(11) **EP 3 736 466 B1**
(45) Date of publication and mention of the grant of the patent: **25.06.2025**
(21) Application number: 18898649.1
(22) Date of filing: 29.12.2018
(51) Int. Cl.: A47K 13/12, F16F 9/44, F16F 9/14

(54) **DAMPER HAVING ADJUSTABLE DAMPING**
DÄMPFER MIT EINSTELLBARER DÄMPFUNG
AMORTISSEUR À AMORTISSEMENT RÉGLABLE

(30) Priority: 03.01.2018 CN 201810004809
(43) Date of publication of application: 11.11.2020
(73) Proprietor: Bestter (Xiamen) Technology Inc., Xiamen, Fujian 361000 (CN)
(72) Inventor: GONG, Binhua, Xiamen, Fujian 361000 (CN); CHEN, Rongmin, Xiamen, Fujian 361000 (CN)
(74) Representative: Verscht, Thomas Kurt Albert
(86) International application number: PCT/CN2018/125547
(87) International publication number: WO 2019/134626

(56) References cited:
- WO-A1-2013/139150
- CN-A- 102 578 952
- CN-A- 106 821 122
- CN-A- 106 821 122
- CN-A- 108 105 319
- CN-U- 204 813 670
- CN-U- 204 971 076
- JP-A- 2012 202 498

## Description

### FIELD OF THE DISCLOSURE

The present disclosure relates to bathroom fixtures, particularly relates to a damper with damping adjustment.

### BACKGROUND OF THE DISCLOSURE

A toilet comprises a ceramic body, a toilet seat and a top cover. When there is not a damper disposed at the toilet seat or the top cover, the toilet seat or the top cover fall fast that they are easy to collide with the ceramic body to make a loud noise. This, on one hand, makes the user with psychological discomfort, on the other hand, this may damage the toilet seat or top cover, leading to decreasing of the service life. Therefore, damper has been applied more and more to the toilet, the damper can make the toilet seat or the top cover open quickly but not affect the original opening action, and on the other hand, can slowly fall down in the lower half of the decline, greatly reducing collision strength.

The existing hydraulic damper is basically sealed and assembled by a shaft sleeve, a shaft core and a one-way oil blade. The damping oil flows in the shaft sleeve through the rotation of the shaft core, and the oil blade opens the oil passage to make the damping oil flow rapidly in one direction. The damping oil has no hydraulic resistance to the shaft core, and the shaft core can rotate rapidly. When the shaft core rotates in the reverse direction, the oil blade closes the oil passage to make the damping oil flow slowly, and the damping oil generates hydraulic resistance to apply on the shaft core, so that the shaft core rotates slowly. Therefore, adjusting a strength of hydraulic damping force generated by the damping oil in the shaft sleeve can adjust the rotation speed of the shaft core when the rotation is damped.

CN 204 813 670 U discloses a torsion adjustable damping device which includes a shaft sleeve capable of being filled with damping oil.

Such a device is also known from WO 2013/139150 A1. According to WO 2013/139150 A1 this device comprises a damping-adjustable rotary buffer, having a shaft sleeve capable of being filled with damping oil, and a rotating shaft hermetically and rotatably mated with the shaft sleeve and capable of disturbing the damping oil flow. The two rotary wing plates of the rotating shaft are respectively sleeved with a one-way oil-flowing valve plate and are slidably mated with the inner cavity wall of the shaft sleeve. Two oil separating ribs pressing against the rotating shaft and limiting the rotation amplitude of the rotary wing plates are disposed on the inner cavity wall of the shaft sleeve. A supporting shaft at the end of the rotating shaft is sleeved in a shaft through hole disposed at the bottom of the shaft sleeve. The two sides of each rotary wing plate on the rotating shaft are respectively provided with a pressure adjusting runner communicating a shaft sleeve inner cavity with the shaft end surface of the supporting shaft. The shaft through hole is screwably connected to an adjustment screw, and the end of the adjustment screw is provided with a screw top capable of closely contacting the shaft end surface and plugging the pressure adjusting runner.

However, some existing dampers usually do not have an adjustment. In some existing dampers with adjustment, a shaft core is usually disposed with a scale groove (oil groove), an adjustment is achieved by closing or opening the scale groove, but this method results in a high production difficulty of the shaft core. In addition, the oil needs to flow from an end face of the shaft core to a side of the shaft core, and an oil passage is long.

### BRIEF SUMMARY OF THE DISCLOSURE

The present disclosure provides a damper with damping adjustment to solve deficiencies of the existing techniques.

A damper with damping adjustment of the present disclosure comprises a shaft sleeve and a shaft core configured to be hermetically and rotatably connected to the shaft sleeve, a chamber wall of an inner chamber of the shaft sleeve is disposed with two oil separating ribs configured to limit rotation ranges of two wing plates, the two wing plates of the shaft core are respectively disposed with a one-way oil blade configured to be slidably connected to the chamber wall of the inner chamber of the shaft sleeve, two ends of the inner chamber of the shaft sleeve are respectively disposed with a shaft core socket configured to receive the shaft core and a nut socket configured to receive an adjusting nut, and the nut socket is screwed to the adjusting nut, wherein: an end surface of the adjusting nut comprises a support shaft groove, an end of the shaft core comprises a support shaft configured to be hermetically and rotatably disposed in the support shaft groove of the adjusting nut, an adjustable clearance is defined between the end surface of the adjusting nut and the end of the shaft core, the adjusting nut and the nut socket comprise upper sections, middle sections and lower sections, diameters of the lower sections are larger than diameters of the middle sections, diameters of the middle section are larger than diameters of the upper sections. An upper end surface of the upper section of the adjusting nut comprises the support shaft groove, the middle section of the adjusting nut comprises an annular groove, an adjusting nut sealing ring surrounds the annular groove to enable the adjusting nut to be hermetically connected to the nut socket of a bottom portion of the shaft sleeve, and an outer peripheral surface of the lower section of the adjusting nut comprises an external thread.

In a preferred embodiment, the diameters of the middle section and the upper section of the adjusting nut are similar to or equal to the diameters of the middle section and the upper section of the nut socket respectively, the lower section of the nut socket comprises an internal thread, the external thread of the lower section of the adjusting nut is engaged with the internal thread of the lower section of the shaft sleeve, while a length of the lower section of the adjusting nut is smaller or equal to a length of the lower section of the shaft sleeve.

In a preferred embodiment, a maximum adjustment distance of the adjustable clearance is R.

In a preferred embodiment, in a locked position, the upper end surface of the adjusting nut is locked to a bottom surface of the shaft core.

In a preferred embodiment, in a maximum loosing position, a lower end surface of the adjusting nut is aligned with a bottom surface of shaft sleeve, in this position, the adjusting nut sealing ring is still in the middle section of the nut socket to maintain sealing.

In a preferred embodiment, when the adjusting nut in the locking position, the upper end surface of the adjusting nut is aligned with a lateral bottom plate of the shaft sleeve.

In a preferred embodiment, a diameter of an end surface of the support shaft of shaft core is smaller than a diameter of the upper end surface of the adjusting nut.

In a preferred embodiment, the lateral bottom plate of the shaft sleeve abuts and is slidably connected to lower end surfaces of the two wing plates disposed in an axial direction, and a pair of bottom oil grooves are symmetrically disposed on the lateral bottom plate and sides of the two oil separating ribs.

In a preferred embodiment, a top portion of the shaft core is disposed with a disk body configured to be disposed in and be rotatably connected to the shaft core socket of the shaft sleeve, top ends the two wing plates are connected to an inner disk surface of the disc body, the inner disc surface slidably cooperates with top portions of the two oil separating ribs, and the two wing plates each is disposed with a blade groove configured to be disposed with the one-way oil blade in a radial direction of the shaft core.

In a preferred embodiment, the inner disk surface comprises a pair of flow grooves configured to open oil passages of both sides of the two oil separating ribs when the shaft core rotates without damping.

In a preferred embodiment, the shaft core socket of the shaft sleeve is further disposed with a sealing cover, and a gasket and a sealing ring are further disposed between the sealing cover and the disc body.

The present disclosure has the following advantages.
1. By locking or loosening of the adjusting nut, a size of the adjustable clearance between the end surface of the adjusting nut and the end of the shaft core can be adjusted, so that a flowing speed of the damping oil between the two sides of the two wing plates can be adjusted, thereby a damping force of the damper is adjusted, and a rotation speed of the shaft core is controlled.
2. In the present disclosure, the shaft core does not need to be disposed with a scale groove, which greatly reduces a production difficulty of the shaft core.
3. The shaft core is directly inserted into the adjusting nut, so that the oil passages are shorter, an adjustment is more flexible, a torque is larger, the number of parts is reduced, and an assembly is convenient.
4. In a preferred embodiment, the adjusting nut and the nut socket both comprise the upper sections, the middle sections and the lower sections, and the diameters of the lower sections are larger than the diameters of the middle sections, and the diameters of the middle sections are larger than the diameters of the upper sections. Thus, in a position of the upper sections, a thickness of a shell of the shaft sleeve is large, and the shaft sleeve is strong and durable.
5. In a preferred embodiment, the maximum adjustment distance of the adjustable clearance is R. In the locked position, the upper end surface of the adjusting nut is aligned with the bottom surface of the inner chamber of the shaft sleeve. In the maximum loosening position, the lower end surface of the adjusting nut is aligned with the bottom surface of the shaft sleeve, and in this position, the adjusting nut sealing ring is still in the middle section of the nut socket to maintain sealing, so that the user can intuitively adjust the adjustable clearance as required (that is, locking or adjusting between the locked position and a position aligned with a bottom end) without oil leakage.

### BRIEF DESCRIPTION OF THE DRAWING

FIG. 1 illustrates an exploded view of the present disclosure.
FIG. 2 illustrates a perspective view of a shaft sleeve of the present disclosure, wherein A and B respectively illustrates different angles of the shaft sleeve.
FIG. 3 illustrates a perspective view of a shaft core with a bottom of the shaft core facing upward.
FIG. 4 illustrates a perspective view of an adjusting nut.
FIG. 5 illustrates a perspective view of a one-way oil blade.
FIG. 6 illustrates a partial cross-sectional view of an assembly of the present disclosure showing oil passages after the adjusting nut is loosened.
FIG. 7 illustrates a cross-sectional view of the shaft core rotating in a forward direction without damping of the present disclosure.
FIG. 8 illustrates a cross-sectional view of the present disclosure with damping.
FIG. 9 illustrates a lock state of the adjustment nut.
FIG. 10 illustrates a partial enlarged view of a section A in FIG. 9.
FIG. 11 illustrates a state in which the adjustment nut is loosened, and A and B respectively illustrate different cross-sectional views.

### References:

adjusting nut 1, adjusting nut sealing ring 2, shaft sleeve 3, one-way oil blade 4, shaft core 5, gasket 6, shaft core sealing ring 7, sealing cover 8, oil clearance 9

### DETAILED DESCRIPTION OF THE EMBODIMENTS

The present disclosure will be further described with the combination of the accompanying embodiments and the accompanying drawings.

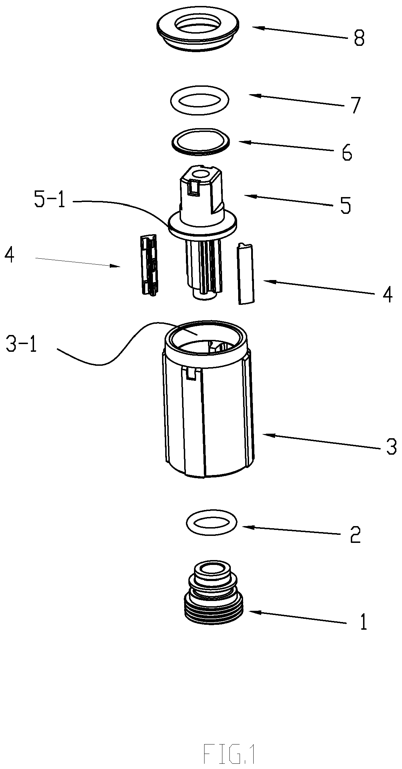

Referring to FIG. 1, a damper with damping adjustment mainly comprises a shaft core 5, a shaft sleeve 3, a one-way oil blade 4, an adjusting nut 1, and a sealing cover 8.

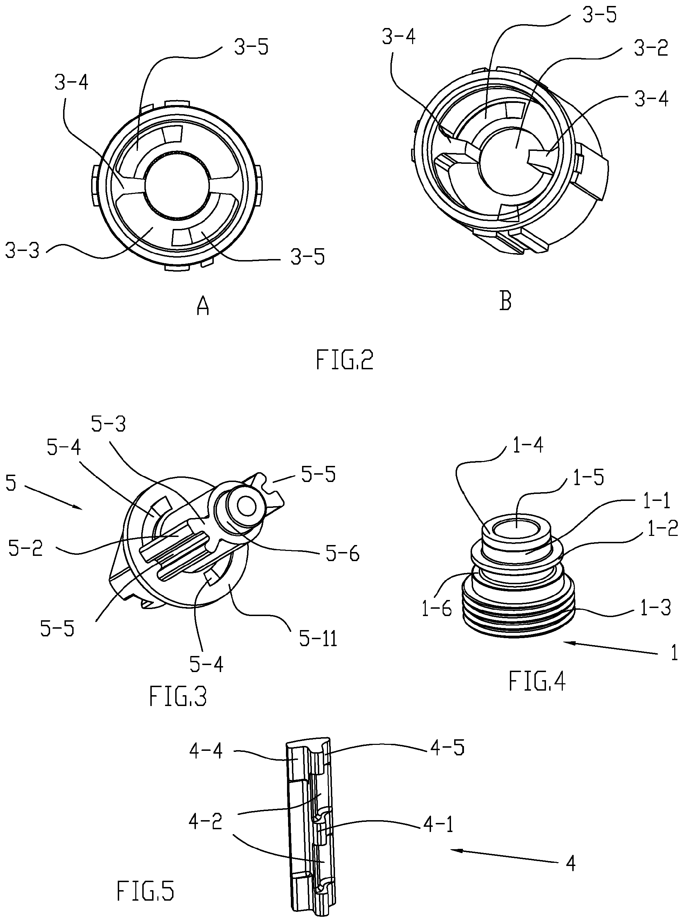

Referring to FIG. 2, an inner chamber of the shaft sleeve 3 of the present disclosure comprises a shaft core socket 3-1 configured to enable the shaft core 5 to be disposed in and a nut socket 3-2 configured to support of an end of the shaft core 5 to rotate. A lateral bottom plate 3-3 is defined between the inner chamber of shaft sleeve 3 and the nut socket 3-2, and the two oil separating ribs 3-4 are centrally symmetrically disposed on a chamber wall of the inner chamber of shaft sleeve 3. Surfaces of the two oil separating ribs 3-4 in a radial direction are aligned with an inner wall of the nut socket 3 -2, the two oil separating ribs 3-4 extend from the shaft core socket 3-1 to be fixedly connected to the lateral bottom plate 3-3, the two oil separating ribs 3-4 are aligned with the shaft core socket 3-1, a pair of bottom oil grooves 3-5 are symmetrically disposed on the lateral bottom plate 3-3 and sides of the two oil separating ribs 3-4.

Referring to FIG. 3, a middle portion (or a top portion) of the shaft core 5 of the present disclosure is disposed with a disk body 5-1 configured to be disposed in and be rotatably connected to the shaft core socket 3-1 of the shaft sleeve 3, and the shaft core 5 is symmetrically disposed with a pair of wing plates 5-2. Top ends of the pair of wing plates 5-2 are connected to an inner disk surface 5-11 of the disc body 5-1, and lower end surfaces 5-3 of the pair of wing plates 5-2 slidably cooperates with the lateral bottom plate 3-3, the inner disc surface 5-11 is configured to be slidably cooperate with top portions of the two oil separating ribs 3-4. The inner disk surface 5-11 comprises a pair of flow grooves 5-4 configured to open oil passages of both sides of the two oil separating ribs 3-4 when the shaft core 5 rotates without damping.

The pair of wing plates 5-2 each is disposed with a blade groove 5-5 configured to be disposed with the one-way oil blade 4 in a radial direction of the shaft core 5, and the one-way oil blades 4 are swingably connected to the blade grooves 5-5. Referring to FIG. 5, in this embodiment, the one-way oil blades 4 each comprises a blade comprising a substantially T-shaped cross section, a rib 4-1 of T shapes each comprises two oil grooves 4-2, a groove 4-4 of a first side of the T shapes each is configured to be hermetically connected to a corresponding one of the blade grooves 5-5 of the pair of wing plates 5-2 to close the two oil grooves 4-2, and a groove 4-5 of a second side of each of the blade grooves 5-5 of the pair of wing plates 5-2 is not configured to be hermetically connected to close the two oil grooves 4-2. Cooperation between the one-way oil blades 4 and the blade grooves 5-5 may also use other structures of existing techniques, which is not a focus of the present disclosure.

An end of the shaft core 5 is disposed with a support shaft 5-6, and a diameter of the support shaft 5-6 is smaller than a diameter of a main shaft of the shaft core 5.

In the present disclosure, an adjusting nut 1 is screwed to the nut socket 3-2. Referring to FIG. 4, the adjusting nut 1 comprises an upper section 1-1, a middle section 1-2, and a lower section 1-3. A diameter of the lower section 1-3 is larger than a diameter of the middle section 1-2, and the diameter of the middle section 1-2 is larger than a diameter of the upper section 1-1. An upper end surface 1-4 of the upper section 1-1 comprises a support shaft groove 1-5, and the support shaft 5-6 is configured to be hermetically disposed in the support shaft groove 1-5. The middle section 1-2 comprises an annular groove 1-6, and an adjusting nut sealing ring 2 surrounds the annular groove 1-6 to enable the adjusting nut 1 to be hermetically connected to the nut socket 3-2 of a bottom portion of the shaft sleeve 3. An external circumferential surface of the lower section 1-3 of the adjusting nut 1 comprises an external thread.

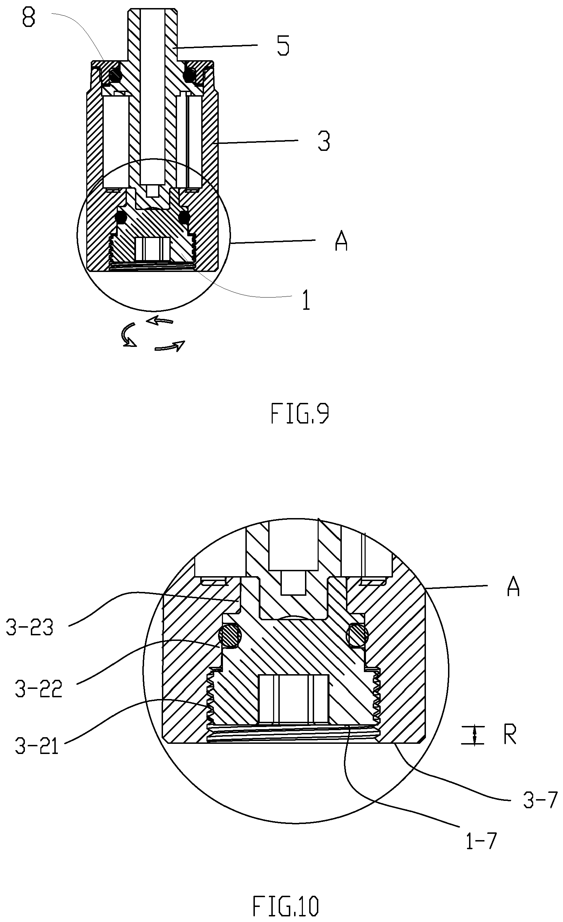

Referring to FIG. 10, the nut socket 3-2 of the shaft sleeve 3 comprises a lower section 3-21, a middle section 3-22, and an upper section 3-23 in an upward direction. The lower section 3-21 comprises an internal thread, a diameter of the lower section 3-21 is larger than a diameter of the middle section 3-22, and the diameter of the middle section 3-22 is larger than a diameter of the upper section 3-23. The external thread of the lower section 1-3 of the adjusting nut 1 is engaged with the internal thread of the lower section 3-21 of the shaft sleeve 3, while a length of the lower section 1-3 of the adjusting nut 1 is smaller than a length of the lower section 3-21 of the shaft sleeve 1, a difference between the two is R.

In this embodiment, a length of the middle section 1-2 and a length of the upper section 1-1 of the adjusting nut 1 is respectively equal to a length of the middle section 3-22 and a length of the upper section 3-23 of the nut socket 3-2. In some embodiments, they are not equal.

In this embodiment, in a locked position, the upper end surface 1-4 of the adjusting nut 1 is aligned with a bottom surface of the inner chamber of the shaft sleeve 3. In some embodiments, they are not aligned.

In a maximum loosening position, a lower end surface 1-7 of the adjusting nut 1 is aligned with a bottom surface 3-7 of the shaft sleeve 3, and in this position, the adjusting nut sealing ring 2 is still disposed in the middle section 3-22 of the nut socket 3-2 to maintain sealing. In some embodiments, they are not aligned. However, in a preferred embodiment, they are aligned.

An assembly of the present disclosure is as follows.

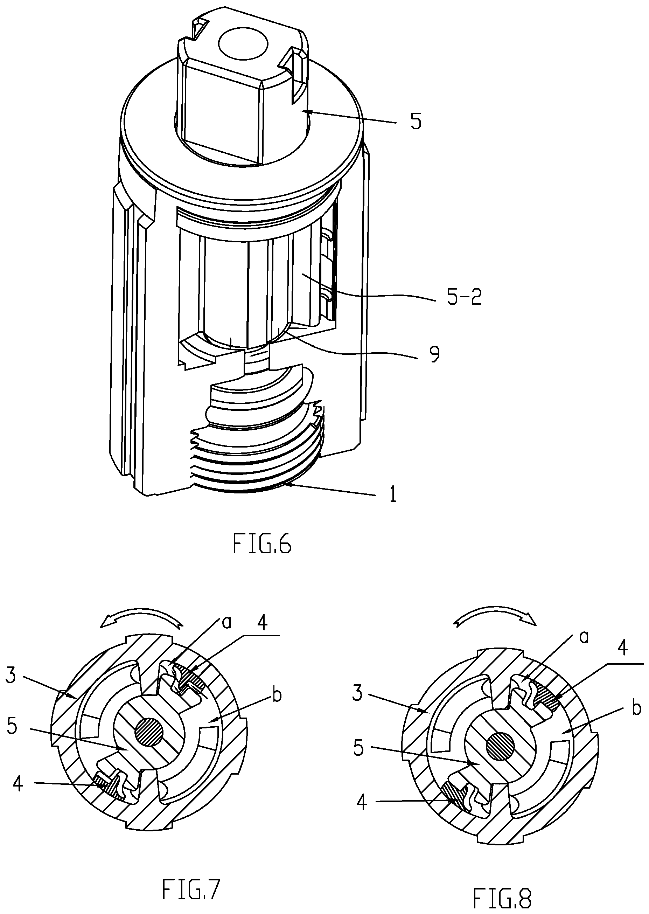

Referring to FIGS. 6-10, the one-way oil blades 4 each is received in a corresponding one of the blade grooves 5-5 of the pair of wing plates 5-2 of the shaft core 5, and then inserted into the inner chamber of the shaft sleeve 3 as a whole. Edges of the one-way oil blades 4 abut and are circumferentially and sildably connected to the chamber wall of the inner chamber of the shaft sleeve 3, and the lower end surfaces of the pair of wing plates 5-2 abut and are slidably connected to the lateral bottom plate 3-3 of the shaft sleeve 3, and the pair of wing plates 5-2 are disposed between the two oil separating ribs 3-4, the disk body 5-1 of the shaft core 5 is rotatably connected to the shaft core socket 3-1, and the top portions of the two oil separating ribs 3-4 abut and are sildably connected to the inner disc surface 5-11 of the shaft core 5, the two oil separating ribs 3-4 abut and are slidably connected to a radial surface of the shaft core 5 in a radial direction, so that the two oil separating ribs 3-4 divide the shaft sleeve 3 into two oil chambers capable of storing damping oil.

The adjusting nut 1 is screwed to the nut socket 3-2, so that the support shaft 5-6 at the end of the shaft core 5 is disposed in and is rotatably connected to the support shaft groove 1-5 to enable the two oil chambers separated by the two oil separating ribs 3-4 to be unable to be in communication. Then a gasket 6 is disposed on an outer annular surface of the disk body 5-1, and a shaft core sealing ring 7 is disposed on the gasket 6 to enable the disk body 5-1 to be hermetically connected to the shaft core socket 3-1 of the shaft sleeve 3. Then, the sealing cover 8 is pressed into and is fixedly welded to the shaft core insert 3-1. The assembly of the present disclosure is completed.

The working principle of the present disclosure will be further described as follows.

Referring to FIG. 9, the adjusting nut 1 is screwed to enable the end surface 1-4 of the adjusting nut 1 to be hermetically connected to the lower end surfaces 5-3 of the shaft core 5, the two oil chambers are separated by the two oil separating ribs 3-4, that is, the damping oil is limited in the two oil chambers, a cover plate (not shown in FIGS.) is connected to the shaft core 5. Referring to FIG. 7, when the cover plate rotates upward, the pair of wing plates 5-2 of the shaft core 5 slides through the pair of bottom oil grooves 3-5 of the lateral bottom plate 3-3 of the shaft sleeve 3, the damping oil quickly passes through the pair of bottom oil grooves 3-5, the pair of wing plates 5-2 flexes the damping oil concurrently, a flow pressure of the damping oil drives the one-way oil blades 4 disposed in the blade grooves 5-5 of the pair of wing plates 5- 2 to swing, the blade grooves 5-5 of the pair of wing plates 5-2 cannot be hermetically disposed to close the oil grooves 4-2, and the damping oil can quickly pass through the oil grooves 4-2, so that during a first half process of an upward rotation of the cover plate, the damping oil has no hydraulic damping force relative to the pair of wing plates 5-2, therefore, the first half process of the upward rotation of the cover plate is easy and convenient. During a second half process of the upward rotation of the cover plate, the oil separating ribs 3-4 slide through the pair of flow grooves 5-4 of the inner disk surface 5-11 of the disk body 5-1 of the shaft core 5, so that the two oil chambers of the shaft sleeve 3 comprising the damping oil and separated by the two oil separating ribs 3-4 are connected through the pair of flow grooves 5-4, the damping oil can flow freely in the inner chamber of the shaft sleeve 3, so that the damping oil has no hydraulic damping force on the pair of wing plates 5-2, so that in a whole process of the upward rotation of the cover plate, the damping oil has no hydraulic damping force relative to the shaft core 5, thus the upward rotation of the cover plate is quick and convenient.

Referring to FIG. 8, in a first half process of a downward rotation of the cover plate, the two oil separating ribs 3-4 slide trough the pair of flow grooves 5-4 of the inner disk surface 5-11 of the disk body 5-1 of the shaft core 5 along a reverse direction, so that the two oil chambers of shaft sleeve 3 comprising the damping oil and separated by the two oil separating ribs 3-4 are connected through the pair of flow grooves 5-4, and the damping oil can flow freely in the inner chamber of the shaft sleeve 3, so that the damping oil has no hydraulic damping force relative to the pair of wing plates 5-2. Therefore, in the first half process of the downward rotation of the cover plate, the damping oil has no hydraulic damping force relative to the shaft core 5, the shaft core 5 can rotate quickly, the cover plate can rotate downward quickly, and the damping oil generates a flow force to enable the one-way oil blades 4 disposed in the blade grooves 5-5 of the pair of wing plates 5-2 to swing in a reverse direction, and the other sides of the one-way oil blades 4 abuts groove walls of the blade grooves 5-5 to close the oil grooves 4-2, when the two oil separating ribs 3-4 is staggered from the pair of flow grooves 5-4 and abuts the inner disk surface 5-11 to immediately enter into a second half process of a downward rotation of the cover plate, the two oil separating ribs 3-4 quickly separates the inner chamber of the shaft sleeve 3 into the two oil chambers to limit the damping oil, as the oil grooves 4-2 are closed, and the damping oil can only slowly pass through the pair of bottom oil grooves 3-5 of the lateral bottom plate 3-3 of the shaft sleeve 3, the damping oil generates hydraulic damping force relative to the pair of wing plates 5-2 to enable the shaft core 5 to rotate slowly to achieve a slow rotation of the second half process of the cover plate. Thus the downward rotation of the cover plate slows down.

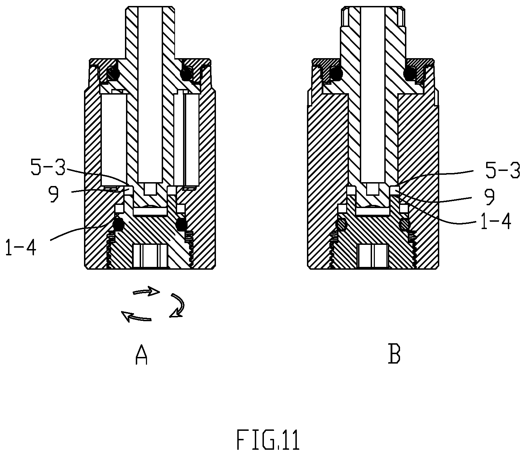

In the second half process of the downward rotation of the cover plate, since the damping oil can only slowly pass through the bottom surface of the lateral bottom plate 3-3 of the shaft sleeve 3 through the pair of bottom oil groove 3-5, the damping oil generates a hydraulic damping force on the pair of wing plates 5-2 to enable the shaft core 5 to rotate slowly at a preset speed, as required, when a rotation speed of the shaft core 5 in a damping state is adjusted, it is necessary to adjust a strength of the hydraulic damping force generated by the damping oil relative to the pair of wing plates 5-2, referring to FIGS. 6 and 11, when the adjusting nut 1 rotates in a reverse direction, the end surface 1-4 of the adjusting nut 1 is separated from the lower end surfaces 5-3 of the shaft core 5 to define an oil clearance 9 between the two, so that the two damping oil chambers separated by the two oil separating ribs 3-4 are connected by the oil clearance 9, the adjusting nut 1 rotates to adjust a size of the oil clearance disposed between the end face 1-4 of the adjusting nut 1 and the lower end surfaces 5-3 of the shaft core 5 to adjust a flow rate of the damping oil passing through the oil clearance 9, so that the strength of the hydraulic damping force of the damping oil relative to the pair of wing plates 5-2 is changed to adjust the rotation speed of the shaft core 5, thus a purpose of a slow damping speed of the cover plate with adjustment is achieved. In the maximum loosening position, the lower end surface 1-7 of the adjusting nut 1 is aligned with the bottom surface 3-7 of the shaft sleeve 3, and in this position, the adjusting nut sealing ring 2 is still in the middle section 3-22 of the nut socket 3-2 to maintain sealing.

It will be apparent to those skilled in the art that various modifications and variation can be made in the present disclosure without departing from the scope of the disclosure. Thus, it is intended that the present disclosure cover the modifications and variations of this disclosure provided they come within the scope of the appended claims.

### INDUSTRIAL APPLICABILITY

Some existing dampers usually do not have an adjustment. In some existing dampers with adjustment, a shaft core is usually disposed with a scale groove (oil groove), an adjustment is achieved by closing or opening the scale groove, but this method results in a high production difficulty of the shaft core. In addition, the oil needs to flow from an end face of the shaft core to a side of the shaft core, and an oil passage is long. The present disclosure solves the technical problems and provides industrial application.

## Claims

1. A damper with damping adjustment, comprising
a shaft sleeve (3), and
a shaft core (5) configured to be hermetically and rotatably connected to the shaft sleeve (3),
a chamber wall of an inner chamber of the shaft sleeve (3) is disposed with two oil separating ribs (3-4) configured to limit rotation ranges of two wing plates (5-2),
the two wing plates (5-2) of the shaft core (5) are respectively disposed with a one-way oil blade (4) configured to be slidably connected to the chamber wall of the inner chamber of the shaft sleeve (3),
two ends of the inner chamber of the shaft sleeve (3) respectively comprise a shaft core socket (3-1) configured to receive the shaft core (5) and a nut socket (3-2) configured to receive an adjusting nut (1), and
the nut socket (3-2) is screwed to the adjusting nut (1), wherein:
an end surface (1-4) of the adjusting nut (1) comprises a support shaft groove (1-5),
an end of the shaft core (5) comprises a support shaft (5-6) configured to be hermetically and rotatably disposed in the support shaft groove (1-5) of the adjusting nut (1),
an adjustable clearance is defined between the end surface (1-4) of the adjusting nut (1) and the end of the shaft core (5)
the adjusting nut (1) and the nut socket (3-2) comprise upper sections (3-23, 1-1), middle sections (3-22, 1-2) and lower sections (3-21, 1-3),
diameters of the lower sections (3-21, 1-3) are larger than diameters of the middle sections (3-22, 1-2),
diameters of the middle section (3-22, 1-2) are larger than diameters of the upper sections (3-23, 1-1),
an upper end surface (1-4) of the upper section (1-1) of the adjusting nut (1) comprises the support shaft groove (1-5),
the middle section (1-2) of the adjusting nut (1) comprises an annular groove (1-6),
an adjusting nut sealing ring (2) surrounds the annular groove (1-6) to enable the adjusting nut (1) to be hermetically connected to the nut socket (3-2) of a bottom portion of the shaft sleeve (3), and
an outer peripheral surface of the lower section (1-3) of the adjusting nut (1) comprises an external thread.

2. The damper with the damping adjustment according to claim 1, **characterized in that**
the diameters of the middle section (1-2) and the upper section (1-1) of the adjusting nut (1) are similar to or equal to the diameters of the middle section (3-22) and the upper section (3-23) of the nut socket (3-2) respectively,
the lower section of the nut socket (3-2) comprises an internal thread,
the external thread of the lower section (1-3) of the adjusting nut (1) is engaged with the internal thread of the lower section (3-21) of the shaft sleeve (3), and
a length of the lower section (1-3) of the adjusting nut (1) is smaller or equal to a length of the lower section (3-21) of the shaft sleeve (3).

3. The damper with the damping adjustment according to claim 2, **characterized in that** a maximum adjustment distance of the adjustable clearance is R.

4. The damper with the damping adjustment according to claim 1, **characterized in that** in a locked position, the upper end surface (1-4) of the adjusting nut (1) is locked to and aligned with a bottom surface of the shaft core (5).

5. The damper with the damping adjustment according to claim 4, **characterized in that** in a maximum loosing position, the adjusting nut sealing ring (2) is in the middle section (3-22) of the nut socket (3-2).

6. The damper with damping adjustment according to claim 1, **characterized in that**
a lateral bottom plate (3-3) of the shaft sleeve (3) abuts and is slidably connected to lower end surfaces of the two wing plates (5-2) disposed in an axial direction, and
a pair of bottom oil grooves (3-5) are symmetrically disposed on the lateral bottom plate (3-3) and sides of the two oil separating ribs (3-4).

7. The damper with adjustable damping according to claim 1, **characterized in that**
a top portion of the shaft core (5) is disposed with a disk body (5-1) configured to be disposed in and be rotatably connected to the shaft core socket (3-1) of the shaft sleeve (3),
top ends the two wing plates (5-2) are connected to an inner disk surface (5-11) of the disc body (5-1),
the inner disc surface (5-11) slidably cooperates with top portions of the two oil separating ribs (3-4), and
the two wing plates (5-2) each is disposed with a blade groove (5-5) configured to be disposed with the one-way oil blade (4) in a radial direction of the shaft core (5).

8. The damper with adjustable damping according to claim 7, **characterized in that** the inner disk surface (5-11) comprises a pair of flow grooves (5-4) configured to open oil passages of both sides of the two oil separating ribs (3-4) when the shaft core (5) rotates without damping.

9. The damper with the damping adjustment according to claim 1, **characterized in that** the shaft core socket (3-1) of the shaft sleeve (3) is further disposed with a sealing cover (8), and
a gasket (6) and a sealing ring (7) are further disposed between the sealing cover (8) and the disc body (5-1).

## Patentansprüche

1. Ein Dämpfer mit Dämpfungseinstellung, der folgendes aufweist:
eine Wellenhülse (3) und
einen Wellenkern (5), der konfiguriert ist, um hermetisch und drehbar mit der Wellenhülse (3) verbunden zu sein,
eine Kammerwand einer Innenkammer der Wellenhülse (3) ist mit zwei Öltrennrippen (3-4) angeordnet, die konfiguriert sind, um Drehbereiche von zwei Flügelplatten (5-2) zu begrenzen,
die zwei Flügelplatten (5-2) des Wellenkerns (5) sind jeweils mit einer Einweg-Ölklinge (4) angeordnet, die konfiguriert ist, um gleitbar mit der Kammerwand der Innenkammer der Wellenhülse (3) verbunden zu sein,
zwei Enden der Innenkammer der Wellenhülse (3) weisen jeweils eine Wellenkernbuchse (3-1), die konfiguriert ist, um den Wellenkern (5) aufzunehmen, und eine Mutterbuchse (3-2), die konfiguriert ist, um eine Einstellmutter (1) aufzunehmen, auf, und
die Mutterbuchse (3-2) ist mit der Einstellmutter (1) verschraubt, wobei:
eine Endoberfläche (1-4) der Einstellmutter (1) eine Haltewellennut (1-5) aufweist,
ein Ende des Wellenkerns (5) eine Haltewelle (5-6) aufweist, die konfiguriert ist, um hermetisch und drehbar in der Haltewellennut (1-5) der Einstellmutter (1) angeordnet zu sein,
ein einstellbarer Freiraum zwischen der Endoberfläche (1-4) der Einstellmutter (1) und dem Ende des Wellenkerns (5) definiert ist
die Einstellmutter (1) und die Mutterbuchse (3-2) obere Abschnitte (3-23, 1-1), mittlere Abschnitte (3-22, 1-2) und untere Abschnitte (3-21, 1-3) aufweisen,
Durchmesser der unteren Abschnitte (3-21, 1-3) größer als Durchmesser der mittleren Abschnitte (3-22, 1-2) sind,
Durchmesser des mittleren Abschnitts (3-22, 1-2) größer als Durchmesser der oberen Abschnitte (3-23, 1-1) sind,
eine obere Endoberfläche (1-4) des oberen Abschnitts (1-1) der Einstellmutter (1) die Haltewellennut (1-5) aufweist,
der mittlere Abschnitt (1-2) der Einstellmutter (1) eine Ringnut (1-6) aufweist,
ein Einstellmutter-Dichtungsring (2) die Ringnut (1-6) umgibt, um der Einstellmutter (1) zu ermöglichen, hermetisch mit der Mutterbuchse (3-2) eines unteren Teils der Wellenhülse (3) verbunden zu sein, und
eine Außenumfangsoberfläche des unteren Abschnitts (1-3) der Einstellmutter (1) ein Außengewinde aufweist.

2. Der Dämpfer mit der Dämpfungseinstellung nach Anspruch 1, **dadurch gekennzeichnet, dass**
die Durchmesser des mittleren Abschnitts (1-2) und des oberen Abschnitts (1-1) der Einstellmutter (1) ähnlich oder gleich den Durchmessern des mittleren Abschnitts (3-23) bzw. des oberen Abschnitts (3-22) der Mutterbuchse (3-2) sind,
der untere Abschnitt der Mutterbuchse (3-2) ein Innengewinde aufweist,
das Außengewinde des unteren Abschnitts (1-3) der Einstellmutter (1) mit dem Innengewinde des unteren Abschnitts (3-21) der Wellenhülse (3) in Eingriff steht, und
eine Länge des unteren Abschnitts (1-3) der Einstellmutter (1) kleiner oder gleich einer Länge des unteren Abschnitts (3-21) der Wellenhülse (3) ist.

3. Der Dämpfer mit der Dämpfungseinstellung nach Anspruch 2, **dadurch gekennzeichnet, dass** ein maximaler Einstellabstand des einstellbaren Freiraums R ist.

4. Der Dämpfer mit der Dämpfungseinstellung nach Anspruch 1, **dadurch gekennzeichnet, dass** in einer verriegelten Position die obere Endoberfläche (1-4) der Einstellmutter (1) mit einer Bodenoberfläche des Wellenkerns (5) verriegelt und ausgerichtet ist.

5. Der Dämpfer mit der Dämpfungseinstellung nach Anspruch 4, **dadurch gekennzeichnet, dass** in einer maximalen Lockerungsposition der Einstellmutter-Dichtungsring (2) in dem mittleren Abschnitt (3-22) der Mutterbuchse (3-2) ist.

6. Der Dämpfer mit Dämpfungseinstellung nach Anspruch 1, **dadurch gekennzeichnet, dass**
eine seitliche Bodenplatte (3-3) der Wellenhülse (3) an unteren Endoberflächen der in einer axialen Richtung angeordneten zwei Flügelplatten (5-2) anliegt und mit diesen gleitbar verbunden ist, und
ein Paar von Bodenölnuten (3-5) symmetrisch an der seitlichen Bodenplatte (3-3) und Seiten der zwei Öltrennrippen (3-4) angeordnet ist.

7. Der Dämpfer mit einstellbarer Dämpfung nach Anspruch 1, **dadurch gekennzeichnet, dass**
ein oberer Teil des Wellenkerns (5) mit einem Scheibenkörper (5-1) angeordnet ist, der konfiguriert ist, um in der Wellenkernbuchse (3-1) der Wellenhülse (3) angeordnet und drehbar mit dieser verbunden zu sein,
obere Enden der zwei Flügelplatten (5-2) mit einer Innenscheibenoberfläche (5-11) des Scheibenkörpers (5-1) verbunden sind,
die Innenscheibenoberfläche (5-11) gleitbar mit oberen Teilen der zwei Öltrennrippen (3-4) zusammenarbeitet, und
die zwei Flügelplatten (5-2) jeweils mit einer Klingennut (5-5) angeordnet sind, die konfiguriert ist, um mit der Einweg-Ölklinge (4) in einer radialen Richtung des Wellenkerns (5) angeordnet zu sein.

8. Der Dämpfer mit einstellbarer Dämpfung nach Anspruch 7, **dadurch gekennzeichnet, dass** die Innenscheibenoberfläche (5-11) ein Paar von Strömungsnuten (5-4) aufweist, die konfiguriert sind, um Öldurchgänge von beiden Seiten der zwei Öltrennrippen (3-4) zu öffnen, wenn der Wellenkern (5) sich ohne Dämpfung dreht.

9. Der Dämpfer mit der Dämpfungseinstellung nach Anspruch 1, **dadurch gekennzeichnet, dass** die Wellenkernbuchse (3-1) der Wellenhülse (3) ferner mit einer Dichtungsabdeckung (8) angeordnet ist, und
eine Dichtung (6) und ein Dichtungsring (7) ferner zwischen der Dichtungsabdeckung (8) und dem Scheibenkörper (5-1) angeordnet sind.

## Revendications

1. Amortisseur à réglage d'amortissement, comprenant
un manchon d'arbre (3), et
un noyau d'arbre (5) configuré pour être relié hermétiquement et en rotation au manchon d'arbre (3),
une paroi de chambre d'une chambre interne du manchon d'arbre (3) est dotée de deux nervures séparatrices d'huile (3-4) configurées pour limiter des plages de rotation de deux plaques à ailettes (5-2),
les deux plaques à ailettes (5-2) du noyau d'arbre (5) sont respectivement dotées d'une lame d'huile unidirectionnelle (4) conçue pour être reliée de manière coulissante à la paroi de chambre de la chambre interne du manchon d'arbre (3),
deux extrémités de la chambre interne du manchon d'arbre (3) comprennent respectivement une douille de noyau d'arbre (3-1) conçue pour recevoir le noyau d'arbre (5) et une douille d'écrou (3-2) conçue pour recevoir un écrou de réglage (1), et
la douille d'écrou (3-2) est vissée à l'écrou de réglage (1), dans lequel :
une surface d'extrémité (1-4) de l'écrou de réglage (1) comprend une rainure d'arbre de support (1-5),
une extrémité du noyau d'arbre (5) comprend un arbre de support (5-6) conçu pour être disposé de manière hermétique et en rotation dans la rainure d'arbre de support (1-5) de l'écrou de réglage (1),
un jeu réglable est défini entre la surface d'extrémité (1-4) de l'écrou de réglage (1) et l'extrémité du noyau d'arbre (5)
l'écrou de réglage (1) et la douille d'écrou (3-2) comprennent des parties supérieures (3-23, 1-1), des parties intermédiaires (3-22, 1-2) et des parties inférieures (3-21, 1-3),
les diamètres des sections inférieures (3-21, 1-3) sont plus grands que les diamètres des sections intermédiaires (3-22, 1-2),
les diamètres de la section intermédiaire (3-22, 1-2) sont plus grands que les diamètres des sections supérieures (3-23, 1-1),
une surface d'extrémité supérieure (1-4) de la partie supérieure (1-1) de l'écrou de réglage (1) comprend la rainure d'arbre de support (1-5),
la section intermédiaire (1-2) de l'écrou de réglage (1) comprend une rainure annulaire (1-6),
un anneau d'étanchéité d'écrou de réglage (2) entoure la rainure annulaire (1-6) pour permettre à l'écrou de réglage (1) d'être relié hermétiquement à la douille d'écrou (3-2) d'une partie inférieure du manchon d'arbre (3), et
une surface périphérique externe de la section inférieure (1-3) de l'écrou de réglage (1) comprend un filetage externe.

2. Amortisseur à réglage d'amortissement selon la revendication 1, **caractérisé en ce que**
les diamètres de la section intermédiaire (1-2) et de la section supérieure (1-1) de l'écrou de réglage (1) sont similaires ou égaux aux diamètres de la section intermédiaire (3-22) et de la section supérieure (3-23) de la douille d'écrou (3-2), respectivement,
la partie inférieure de la douille d'écrou (3-2) comprend un filetage interne,
le filetage externe de la partie inférieure (1-3) de l'écrou de réglage (1) est en prise avec le filetage interne de la partie inférieure (3-21) du manchon d'arbre (3), et
une longueur de la partie inférieure (1-3) de l'écrou de réglage (1) est inférieure ou égale à une longueur de la partie inférieure (3-21) du manchon d'arbre (3).

3. Amortisseur à réglage d'amortissement selon la revendication 2, **caractérisé en ce qu'**une distance de réglage maximale du jeu réglable est R.

4. Amortisseur à réglage d'amortissement selon la revendication 1, **caractérisé en ce que** dans une position verrouillée, la surface d'extrémité supérieure (1-4) de l'écrou de réglage (1) est verrouillée et alignée avec une surface inférieure du noyau d'arbre (5).

5. Amortisseur à réglage d'amortissement selon la revendication 4, **caractérisé en ce que** dans une position de desserrage maximal, l'anneau d'étanchéité d'écrou de réglage (2) se trouve dans la section intermédiaire (3-22) de la douille d'écrou (3-2).

6. Amortisseur à réglage d'amortissement selon la revendication 1, **caractérisé en ce que**
une plaque inférieure latérale (3-3) du manchon d'arbre (3) est en butée contre et est reliée de manière coulissante à des surfaces d'extrémité inférieures des deux plaques à ailettes (5-2) disposées dans une direction axiale, et
une paire de rainures d'huile inférieures (3-5) est disposée symétriquement sur la plaque inférieure latérale (3-3) et les côtés des deux nervures séparatrices d'huile (3-4).

7. Amortisseur à amortissement réglable selon la revendication 1, **caractérisé en ce que**
une partie supérieure du noyau d'arbre (5) est dotée d'un corps de disque (5-1) conçu pour être disposé dans et être relié en rotation à la douille de noyau d'arbre (3-1) du manchon d'arbre (3),
des extrémités supérieures des deux plaques à ailettes (5-2) sont reliées à une surface de disque interne (5-11) du corps de disque (5-1),
la surface de disque interne (5-11) coopère de manière coulissante avec des parties supérieures des deux nervures séparatrices d'huile (3-4), et
les deux plaques à ailettes (5-2) sont chacune dotées d'une rainure de lame (5-5) conçue pour être dotée de la lame d'huile unidirectionnelle (4) dans une direction radiale du noyau d'arbre (5).

8. Amortisseur à amortissement réglable selon la revendication 7, **caractérisé en ce que** la surface de disque interne (5-11) comprend une paire de rainures d'écoulement (5-4) conçues pour ouvrir des passages d'huile des deux côtés des deux nervures séparatrices d'huile (3-4) lorsque le noyau d'arbre (5) tourne sans amortissement.

9. Amortisseur à réglage d'amortissement selon la revendication 1, **caractérisé en ce que** la douille de noyau d'arbre (3-1) du manchon d'arbre (3) est en outre dotée d'un couvercle d'étanchéité (8), et
un joint d'étanchéité (6) et un anneau d'étanchéité (7) sont en outre disposés entre le couvercle d'étanchéité (8) et le corps de disque (5-1).
